# EUROPEAN PATENT APPLICATION

(11) **EP 0 722 968 A1**
(43) Date of publication of application: **24.07.1996**
(21) Application number: 95309170.9
(22) Date of filing: 18.12.1995
(51) Int. Cl.: C08G 67/02

(54) **Catalyst composition suitable for preparing polyketones**

(30) Priority: 23.12.1994 GB 9426095
(71) Applicant: BP Chemicals Limited, London EC2M 7BA (GB)
(72) Inventor: Couves, John William, BP Chemicals Limited, Sunbury-on-Thames, Middlesex TW16 7LN (GB)
(74) Representative: Hoey, Shona

(57) **Abstract**

A catalyst suitable for preparing polyketones wherein the catalyst is supported on silica, said silica containing hydroxyl functional groups. Also claimed is a process for preparing polyketones using the silica supported catalyst in the presence of a cocatalyst.

## Description

The present invention relates to novel catalyst compositions suitable for use in preparing polyketones, in particular heterogeneous catalyst compositions.

It is known to produce polyketones, which are linear alternating polymers of (a) one or more olefins and (b) carbon monoxide, by a liquid phase process in which the olefin(s) and carbon monoxide are polymerised together in methanol, ethanol or propanol solvent in the presence of a palladium catalyst. Such a process, which is disclosed in more detail in for example EP 121965 and EP 314309, typically employs a catalyst derived from (a) a palladium compound (b) a source of an anion which is either non-coordinating or only weakly coordinating to palladium and (c) a bisphosphine of formula R¹R²P-R-PR³R⁴ where R¹ to R⁴ are independently aryl groups which can optionally be polar substituted and R is a divalent organic bridging group such as -(CH₂)ₙ- (n=2 to 6). The source of the anion is typically its conjugate acid.

EP-A-508502 discloses catalyst compositions comprising:
a) a Group VIII metal compound,
b) a Lewis acid of the general formula MFₙ in which M represents an element that can form a Lewis acid with fluorine, F represents fluorine and n has the value 3 or 5, and
c) a dentate ligand containing at least two phosphorus-, nitrogen- or sulphur-containing dentate groups through which the dentate ligand can complex with the Group VIII metal.

EP 248483 discloses catalyst compositions which are supported on a carrier material. Such carrier materials are preferably porous and can be either organic or inorganic carrier materials e.g. silica. However, the problem with using inorganic carrier materials (e.g. silica) is that they need to be separated from the final polymer product. For example EP511713, teaches that the average particle diameter of the carrier material should be considerably larger than that of the prepared polymer in order to effect separation.

We have now found that by choosing specific silica carriers, the problem of contamination of polymers with residual support can be significantly reduced.

Therefore, according to the present invention, there is provided a catalyst suitable for preparing polyketones characterised in that the catalyst is supported on silica, said silica containing hydroxyl functional groups.

The catalyst can be any catalyst that is suitable for preparing polyketones using carbon monoxide and one or more olefins. In particular, the catalyst compositions may comprise a Group VIII metal compound. The Group VIII metals are iron, cobalt, nickel, ruthenium, rhodium, palladium, osmium, iridium and platinum. Palladium is particularly preferred as the Group VIII metal.

The Group VIII metal compound also contains at least one ligand capable of co-ordinating to the Group VIII metal. Examples of such ligands are phosphorus-, arsenic-, antimony-, nitrogen-, and sulphur-donor ligands, preferably phosphorus-donor ligands e.g. phosphines, phosphinites, phosphonites or phosphites, preferably phosphines. Where phosphines are used, these can be mono-dentate or bidentate. Useful monodentate ligands are of the formula PR₁R₂R₃ where R₁R_{2,}and R₃ are independently an optionally substituted alkyl or aryl group e.g. C₁-C₆ alkyl, phenyl, anisyl, tolyl. It is preferred that R₁=R₂=R₃; preferred monodentate phosphines are PPh₃, PMe₃, PEt₃ and P(n-Bu)₃. Alternatively bidentate phosphines can be used especially phosphines of the formula R₄R₅P-R₈-PR₆R₇ where R₄, R₅, R₆ and R₇ may be the same or different and all have the same definition as the groups R₁, R₂, R₃, and R₈ is a divalent organic group such as -(CH₂)ₙ- where n = 2 to 6. Examples of such bidentate phosphine are 1,3-bis (diphenylphosphino)propane (dppp); 1,2-bis(diphenylphosphino) ethane (dppe); 1,4-bis(diphenylphosphino)butane (dppb) and 1,3-bis[bis(2-methoxyphenyl)phosphino]propane.

In addition to the ligand capable of co-ordinating to the Group VIII metal, the Group VIII metal compound will preferably comprise other groups bonded to the Group VIII metal; these groups may derive from any Group VIII metal precursors that have been used in generating the Group VIII metal compound. Such groups are suitably halides, especially chloride; acetate, trifluoroacetate, tosylate, nitrate, sulphate, acetylacetonate, cyanide, preferably acetate.

In addition to the catalyst there may also be present a cocatalyst. Such a cocatalyst may be either a Bronsted or a Lewis acid. Where the cocatalyst is a Bronsted acid it is preferably an acid having a pKa of less than 2 e.g. HBF₄. Where the cocatalyst is a Lewis acid it is preferably a Boron Lewis Acid e.g. BF₃ or a boron hydrocarbyl.

In particular the Boron hydrocarbyl compound can be a Lewis acid of the formula BXYZ where at least one of X Y and Z is a monovalent hydrocarbyl group. Where any one of X Y or Z is a monovalent hydrocarbyl group, it is suitably an alkyl for example a C₁-C₆ alkyl group, or an aryl group for example, a substituted or unsubstituted phenyl group for example C₆H₅ or C₆F₅. Other suitable monovalent hydrocarbyl groups are m,m-C₆H₃(CF₃)₂, CF₃ and C₂F₅. It is to be understood that two or three of the groups X, Y and Z can together form bi or trivalent groups respectively. At least one of X, Y and Z is a monovalent hydrocarbyl group; however, it is preferred that at least two, preferably three, of X, Y and Z are each monovalent hydrocarbyl groups. Suitable examples of such Lewis acids are BMe₃, BEt₃, B(C₆H₅)₃, B[mm-(CF₃)₂C₆H₃]₃, B(mesityl)₃, B(p-ClC₆H₄)₃, B(m-CF₃C₆H₄)₃ and B(C₆F₅)₃, preferably B(C₆F₅)₃. Where one or more of X, Y and Z is not a hydrocarbyl group, it is suitably a OH, OR or halide group preferably a halide group for example fluoride, chloride or bromide especially fluoride. Examples of compounds where one of X, Y, Z is a group other than a hydrocarbyl group are boronic acids of the formula RB(OH)₂ where R is a hydrocarbyl group e.g. PhB(OH)₂, and hydrocarbyl 1,3,2-benzodioxaboroles.

Other suitable boron hydrocarbyl compounds for use in this invention are borate salts of the formula MBR₄ where M is an alkali metal e.g. Li, Na, and R is a hydrocarbyl group e.g. C₆H₅, C₆F₅ and substituted analogues. For example a suitable compound could be LiB(C₆F₅)₄ or NaB(C₆H₅)₄.

The boron hydrocarbyl compound for example the Lewis Acid BXYZ is added to the reaction medium in an amount such that the Group VIII metal: Boron ratio is in the range 10:1 to 1:200 preferably 1:1 to 1:100 more preferably 1:5 to 1:70 e.g. 1:50.

An essential feature of the present invention is the silica support. The silica will suitably have a particle size (as measured by mass-mean diameters) of less than 100 microns preferably less than 70 microns for example less than 50 microns. The silica will contain hydroxyl functional groups and may have a specific surface area (BET) of 50 to 1000m²/g e.g. 100 to 600m²/g and a pore volume of 0.5 to 5m/g e.g. 1 to 3ml/g. The quantity of hydroxyl groups on the silica depends on the specific surface are on the physico chemical treatment and on the drying to which it may have been subjected. Such drying (or calcining) for the purposes of the present invention is preferably carried out at a temperature in the range 100 to 200° preferably in the range 130 to 170°C. The calcining process should be carried out for a sufficient length of time for any physisorbed water to be driven off. The silica will typically have a hydroxyl content of 0.1 to 5 preferably 0.5 to 3 millimoles of hydroxyl groups per gram.

It is an advantage of the present invention that by using silicas having average particle size of less than 100 microns and preferably hydroxyl content of 0.5 to 3 millimoles of hydrogen groups per gram, that fragmentation of the silica is very efficient in the process and the residual silica particle size is less than about 1 micron. Consequently there is provided a further feature of the present invention which is film or fibre products made using polyketones that have been produced using the catalysts and process as herein above and herein below described.

The methods by which the catalyst is supported on the silica are well known in the art. In particular the catalyst can be impregnated onto the carrier by contacting the carrier with a solution of the catalyst then removing the solvent or diluent. The solvent used in the impregnation of the catalyst on the silica is preferably one in which the catalyst is readily soluble e.g. CH₂Cl₂. Where the polymerisation is carried out in the liquid (or slurry) phase, the solvent used in the impregnation of the catalyst on the silica may be the same or different to the solvent or diluent in which the polymerisation is carried out.

The amount of catalyst deposited on the silica can vary but is suitably in the range 0.5 to 5 preferably from 1.0 to 2.0% by weight of the silica. The cocatalyst e.g. B(C₆F₅)₃ can also be deposited on the silica support; however where the polymerisation is carried out in the slurry phase it is preferred that the catalyst e.g. the Group VIII metal compound is supported on the silica and the cocatalyst is introduced into the reaction system in the liquid phase.

The catalyst compositions as supported on silica can be used in either the gas-phase or the liquid-phase. It is to be understood that the term liquid phase also includes slurry-phase where the polyketone product is insoluble in the reaction solvent. Where the catalyst compositions are used in the liquid phase, any suitable solvent can be used. Examples of such solvents are ketones (e.g. acetone), ethers, glycol ethers, chlorinated solvents (e.g. chloroform, dichloromethane), hydrocarbon solvents (e.g. n-pentane cyclohexane, toluene), methanol and ethanol. A particularly preferred solvent is any olefinically-unsaturated hydrocarbon especially where such a hydrocarbon is also a reactant in the polymerisation reaction. Examples of such olefinically-unsaturated hydrocarbons are C₃-C₁₀ olefins (preferably C₃-C₆ olefins e.g. propylene, n-butene, isobutene, and n-hexene) and styrene. A preferred olefinically-unsaturated olefin as solvent is propylene. It is a feature of the present invention that non-alcoholic solvent systems can be used where necessary. Alcohol impurities in the final polymer can be undesirable where the polymer is to be used for food packaging since alcohols are usually toxic. The solvents may contain small quantities of water for example up to about 0.5% wt/wt. Where the reaction is carried out in the gas phase, small quantities of water may be added.

The polymerisation process is suitably carried out at a temperature in the range 20 to 150°C preferably 50 to 120°C and at elevated pressure, (e.g. 1 to 100 bars preferably 50 to 70 bars). The over pressure of gas is suitably carbon monoxide or carbon monoxide and olefin, if the olefin is gaseous under the reaction conditions. It is possible to operate the polymerisation process either batchwise or continuously.

In a further aspect of the present invention there is provided a process for preparing polyketones using a suitable catalyst supported on silica characterised in that the silica has an average particle size of less than 100 microns.

The invention will now be illustrated with reference to the following examples.

### Example 1 : Preparation of Catalyst

A Pd on silica catalyst was prepared as follows:-

A solution of 0.4g of Pd(dppp) (OAc)₂ dissolved in 100ml of dichloromethane was added by cannula to a stirred slurry of 20g of Crosfield ES70 silica in 150ml of dichloromethane. The resultant slurry was stirred for 30 minutes at room temperature before solvent was removed under vacuum, taking care not to heat the slurry above about 30°C. Continued evacuation at room temperature overnight resulted in a free-flowing catalyst that was stored under nitrogen.

All manipulations were carried out under exclusion of air using standard Schlenk techniques; dichloromethane was dried and deoxygenated before use by distillation over calcium hydride under a nitrogen atmosphere. The Crosfield ES70 silica had been pre-calcined by treatment at 150°C overnight in a vacuum oven. Pd(dppp)(OAc)₂ was prepared by the method set out in European Patent Application EP 619335A.

Ethene/propene/carbon monoxide terpolymers were prepared in two reactions using the Pd/silica catalyst prepared by the above method:-

### Example 2

A stainless steel autoclave was charged with the following reagents:-
- A solution of 0.1666g of tris(pentafluorophenyl)borane dissolved in 110ml of n-pentane
- 25.82g of propene

The autoclave was pressurised to about 25 barg with a 1:1 mixture of ethene/carbon monoxide and heated to 70°C. 0.502g of the Pd/silica catalyst was added to an injector vessel and admitted to the autoclave under a positive pressure of 1:1 ethene/carbon monoxide, to provide a final pressure of 50 barg. The autoclave was then maintained at 50 barg/70°C for 5.25 hours before being cooled to ambient temperature and vented slowly to atmospheric pressure. Polymer was removed and washed with acetone, then dried overnight in a vacuum oven at 50°C, to give a nett yield of 14.15g. The intrinsic viscosity of the polymer was 2.8dl/g.

### Example 3

The procedure described in Example 1 was repeated, except that the autoclave was charged with a solution of 0.1633g of tris(pentafluorophenyl)borane in 110ml of dichloromethane, together with 25.28g of propene. The amount of Pd/silica catalyst added was 0.5055g, while the reaction time was 3.33 hours, resulting in a polymer yield of 12.17g. The intrinsic viscosity of the polymer was 1.1dl/g.

## Claims

1. A catalyst suitable for preparing polyketones characterised in that the catalyst is supported on silica, said silica containing hydroxyl functional groups.

2. A catalyst as claimed in claim 1 comprising a Group VIII metal compound.

3. A catalyst as claimed in claim 2 wherein the Group VIII metal compound is selected from iron, cobalt, nickel, ruthenium, rhodium, palladium, osmium, iridium and platinum.

4. A catalyst as claimed in claim 3 wherein the Group VIII metal compound contains at least one ligand capable of co-ordinating to the Group VIII metal.

5. A catalyst as claimed in claim 4 wherein the ligand is selected from phosphorus, arsenic, antimony, nitrogen and sulphur donar ligands.

6. A catalyst as claimed in any one of claims 1 to 5 wherein the silica has a particle size of less than 100 microns.

7. A catalyst as claimed in any one of claims 1 to 6 wherein the silica has a hydroxyl content of 0.5 to 3 millimoles of hydrogen groups per gram.

8. A catalyst composition comprising a catalyst as claimed in any one of claims 1 to 7 and a cocatalyst.

9. A catalyst composition as claimed in claim 8 wherein the cocatalyst is a Bronsted acid or a Lewis acid.

10. A catalyst composition as claimed in claim 9 wherein the Bronsted acid is an acid having a pKa of less than 2.

11. A catalyst composition as claimed in claim 9 wherein the Lewis acid is a boron Lewis acid.

12. A process for the preparation of polyketones using carbon monoxide and one or more olefins using a catalyst as claimed in any one of claims 1 to 11.

13. A process as claimed in claim 12 carried out in the gas phase.

14. A process as claimed in claim 12 carried out in the liquid phase.

15. A process as claimed in claim 14 using a solvent selected from ketones, ethers, glycol ethers, chlorinated solvents, hydrocarbon solvents, methanol and ethanol.

16. A process as claimed in any one of claims 12 to 15 carried out at a temperature of from 20 to 150°C and a pressure of 1 to 100 bar.
